# EUROPÄISCHE PATENTSCHRIFT

(11) **EP 3 423 538 B1**
(45) Veröffentlichungstag und Bekanntmachung des Hinweises auf die Patenterteilung: **21.06.2023**
(21) Anmeldenummer: 17706754.3
(22) Anmeldetag: 22.02.2017
(51) Int. Cl.: C09J 5/02

(54) **ERHÖHUNG DER ABZUGSKRAFT DURCH SELEKTIVE PLASMAVORBEHANDLUNG**
INCREASING THE PULL-OFF FORCE BY SELECTIVE PLASMA PRETREATMENT
AUGMENTATION DE LA FORCE D'ARRACHEMENT PAR PRÉTRAITEMENT SÉLECTIF AU PLASMA

(30) Priorität: 02.03.2016 DE 102016203413
(43) Veröffentlichungstag der Anmeldung: 09.01.2019
(73) Patentinhaber: tesa SE, 22848 Norderstedt (DE)
(72) Erfinder: HÄHNEL, Marcel, 25336 Klein Nordende (DE); REICH, Sarah, 21259 Otter (DE)
(74) Vertreter: tesa SE
(86) Internationale Anmeldenummer: PCT/EP2017/054032
(87) Internationale Veröffentlichungsnummer: WO 2017/148763

(56) Entgegenhaltungen:
- DE-A1-102011 075 470
- US-A1- 2009 227 089

## Beschreibung

Die Erfindung betrifft ein Verfahren zur Verklebung einer Klebmasseschicht mit einer Fügeteiloberfläche. Die Erfindung betrifft auch ein Bauteil mit einer ersten Fügeteiloberfläche und einer zweiten Fügeteiloberfläche, die beide miteinander mit einer Klebmasseschicht verklebt sind.

Eine Steigerung der Verankerungskräfte von Klebebandprodukten auf Substraten und in internen Fertigungsprozessen kann durch den Einsatz von Primern und physikalischen Vorbehandlungsmethoden sowie deren Kombination erzielt werden. Diese Methoden sind grundsätzlich seit geraumer Zeit etabliert und werden angewandt.

Nach dem Stand der Technik ist man bemüht die Oberflächen vollflächig homogen einer Vorbehandlung zu unterziehen, damit in allen Bereichen eine gleichbleibende Verklebung oder Bedruckung erzielt wird.

Von Kunden werden definierte Klebkraftniveaus und oftmals ein kohäsives Versagen des Klebebandproduktes gefordert. Bei einer optimalen Verankerung werden nach bisherigem Verständnis alle beteiligten Oberflächen durch entsprechende Vorbehandlung homogen auf die Verklebung vorbereitet, um bestmögliche Verankerungswerte zu erzielen. Daneben können Oberflächen nach dem Stand der Technik im Mikrometerbereich selektiv und strukturiert mittels Plasmen vorbehandelt werden. Hier liegen die Anwendungen im Druckbereich mit besonderem Fokus auf der nasschemischen Metallisierung (siehe: "Plasma Printing and Related Techniques - Patterning of Surfaces Using Microplasmas at Atmospheric Pressure" in Plasma Process. Polym. 2012, 9, 1086-1103). US 2009/227089 beschreibt ein Klebeband, bei dem ein Trägermaterial und eine Klebmasseschicht in Kontakt stehen, wobei das Trägermaterial des Klebebandes eine Modifikation der Oberfläche aufweist, welche ein Muster aufweist.

Es ist Aufgabe der vorliegenden Erfindung, ein Verfahren zur Verklebung einer Klebmasseschicht auf einer Fügeteiloberfläche zur Verfügung zu stellen, durch das die Trennkraft zwischen Klebmasseschicht und Fügeteiloberfläche größer wird als die Trennkraft bei vollflächig homogenem kohäsivem Versagen der Verklebung. Es ist auch Aufgabe der Erfindung, ein Bauteil mit einer Verklebung zur Verfügung zu stellen, die hohe Trennkräfte aufweist.

Die Aufgabe wird in ihrem ersten Aspekt durch ein eingangs genanntes Verfahren gelöst, indem eine erste Klebmasseschichtoberfläche auf eine erste Fügeteiloberfläche aufgebracht wird und die erste Klebmasseschichtoberfläche und/oder die erste Fügeteiloberfläche flächig partiell vorbehandelt werden. Flächig partiell ist hier sehr allgemein zu verstehen; es handelt sich dabei um eine nicht homogene oder strukturierte Vorbehandlung, die eine zufällige, homogen strukturiert oder gemustert und/oder inhomogene Struktur aufweist, wobei sich die Struktur in aufeinanderfolgenden Verfahren immer wiederkehrend wiederholen kann.

Erfindungswesentlich ist jedoch, dass die beiden ersten oder eine der beiden ersten Oberflächen nur bereichsweise vorbehandelt werden. Unabhängig von der Vorbehandlung der Oberfläche ist jedoch der Schichtaufbau der ersten Fügeteiloberfläche und der daraufgeklebten Klebmasseschicht über die gesamte Ausdehnung der Verklebung homogen, d. h. überall identisch. Durch die inhomogene Vorbehandlung der ersten Klebmasseschichtoberfläche und/oder der ersten Fügeteiloberfläche entsteht bei geschickter Wahl der Vorbehandlungsart und der gewählten Klebmasse sowie des Materials der Fügeteiloberfläche beim Öffnen der Verklebung gegenüber einer homogenen vollflächigen Vorbehandlung eine vergrößerte Bruchfläche über der Verklebungsfläche und damit erhöhte Trennkräfte.

Unter einer Fügeteiloberfläche wird hier auch allgemein Substartoberfläche verstanden. Bei dem Substrat kann es sich um biegsames oder festes Substrat handeln. Es kann sich auch um eine Lackschicht oder Kunststoffschicht handeln. Es kann aber auch ein Karosseriebauteil aus dem Automobilbau sein. Das Fügeteil kann wiederum beschichtet oder unbeschichtet ausgebildet sein.

Über den vorbehandelten Bereichen der Verklebungsfläche bricht die Verklebung vorzugsweise kohäsiv auf, d. h. die Verklebung bricht entlang der Klebmasseschicht auf, weil die Trennkräfte zwischen erster Klebmasseschichtoberfläche und erster Fügeteiloberfläche gegenüber den Trennkräften der unbehandelten Verklebung zwischen erster Klebmasseschichtoberfläche und erster Fügeteiloberfläche erhöht sind. Während die Verklebung über den unbehandelten Bereichen entlang der Verklebungsfläche zwischen erster Klebmasseschichtoberfläche und erster Fügeteiloberfläche versagt.

Die Klebmasseschicht ist vorzugsweise Bestandteil eines Klebebandes. Das Klebeband weist zweckmäßigerweise eine Trägerfolie auf, an deren einen Seite die Klebmasseschicht aufgebracht ist. Es ist aber auch denkbar, dass die Klebmasseschicht selbst hinreichend fest ist, so dass auf eine Trägerfolie verzichtet werden kann.

Zusätzlich bricht die Klebmasseschichtoberfläche jedoch auch quer, vorzugsweise senkrecht zur Verklebungsoberfläche und/oder der ersten Klebmasseschichtoberfläche und der ersten Fügeteiloberfläche zwischen dem Bereich kohäsiven und dem Bereich adhäsiven Versagens auf, so dass ein Teil der Klebmasseschicht, der an einer Trägerfolie anhaftet, von der Fügeteiloberfläche abgezogen werden kann. Durch das bereichsweise adhäsive und das bereichsweise kohäsive Versagen der Klebverbindung entsteht eine vergrößerte Bruchfläche, die insgesamt eine größere Trennkraft zwischen dem abgelösten Teil der Klebmasseschicht und der Fügeteiloberfläche bewirkt.

Vorzugsweise ist eine zweite Oberfläche der Klebmasseschicht auf eine zweite Fügeteiloberfläche aufgebracht. Zweckmäßigerweise wird die Klebmasseschicht in Form eines Klebebandes zur Verfügung gestellt. Das Klebeband weist eine Klebmasseschicht und eine Trägerfolie auf. Die erste Oberfläche der Klebmasseschicht ist der Trägerfolie gegenüberliegend angeordnet. Beim Zusammenkleben der zwei Fügeteile an der ersten Fügeteiloberfläche und der zweiten Fügeteiloberfläche mittels der Klebmasseschicht wird zunächst die erste Klebmasseschichtoberfläche auf die erste Fügeteiloberfläche des ersten Fügeteiles aufgeklebt, dann die Abziehfolie von der zweiten Oberfläche der Klebmasseschicht abgezogen und auf die zweite Klebmasseschichtoberfläche die zweite Fügeteiloberfläche des zweiten Fügeteiles aufgeklebt. Dadurch entsteht eine durch die Klebmasse bewirkte Klebverbindung zwischen der ersten Fügeteiloberfläche und der zweiten Fügeteiloberfläche. Die erste Fügeteiloberfläche ist vorzugsweise eine Oberfläche eines ersten Fügeteiles, das selbständig und unabhängig beweglich von einem zweiten Fügeteil zur Verfügung steht, das die zweite Fügeteiloberfläche aufweist. In anderen Ausführungsformen ist es jedoch auch denkbar, dass erste Fügeteiloberfläche und zweite Fügeteiloberfläche Oberflächen desselben Fügeteils sind.

Zweckmäßigerweise findet die Vorbehandlung der Oberfläche der Klebmasseschicht und/oder der Fügeteiloberfläche mittels eines Primerauftrages oder mittels einer Plasmavorbehandlung statt.

Der Primerauftrag kann auf die erste Fügeteiloberfläche und/oder die erste Klebmasseschichtoberfläche durch herkömmliche Verfahren wie z.B. sprühen, streichen oder rakeln erfolgen. Dabei können Primerstrukturen beinahe beliebiger Gestalt auf die Oberflächen aufgebracht werden. Vorzugsweise liegen kleinste Abstände zwischen den vorbehandelten Bereichen der Oberflächen zwischen 1 bis 10 µm, besonders bevorzugt zwischen 1 bis 2 µm.

In einer anderen Ausführungsform des erfindungsgemäßen Verfahrens werden die Oberflächen mittels Plasma vorbehandelt oder durch eine Korona vorbehandelt. Durch eine Plasma- oder Koronavorbehandlung der Oberflächen werden die Oberflächen aktiviert. Durch Aktivierung der Oberflächen und anschließendes Aufbringen einer Klebmasse auf die aktivierte Oberfläche wird die Trennkraft gegenüber der nicht aktivierten Oberfläche erhöht. Zweckmäßigerweise wird die Oberfläche aber nicht vollflächig und plasmaaktiviert, sondern ebenfalls flächig partiell aktiviert, wobei die Aktivierung nach einem vorgegebenen, sich wiederholenden Muster, z. B. mittels eines einer Plasmaquelle in Stempelform oder durch abdeckende Schablonen erfolgen kann.

Unter bestimmten Umständen können Plasmaquellen auch inhomogene Behandlungen erzeugen. Dies ist besonders bei filamentären Entladungen oder Entladungen mit stark unterschiedlichen Feldbereichen möglich. Hier kann in bestimmten Prozesskonfigurationen durch die geeignete Wahl einer höheren Bahngeschwindigkeit des zu behandelnden Materials bei gleichzeitig kleiner Plasmaleistung eine inhomogene Behandlung erzielt werden.

In einer besonders zweckmäßigen und bevorzugten Ausführungsform des erfindungsgemäßen Verfahrens werden die Plasma- und Primervorbehandlung kombiniert, und zwar vorzugsweise indem zunächst die Oberfläche mittels Plasma flächig partiell vorbehandelt wird und auf die flächig partiell vorbehandelten Bereiche der Oberfläche ein Primer aufgebracht wird, der aufgrund der Plasmavorbehandlung mit einer erhöhten Trennkraft auf die Fügeteiloberfläche aufgeklebt ist.

Die Erfindung wird auch durch ein eingangs genanntes Bauteil gemäß Anspruch 10 gelöst, das erfindungsgemäß dadurch gekennzeichnet ist, dass eine Trennkraft zwischen den beiden Fügeteiloberflächen höher ist als eine Trennkraft einer vollflächig kohäsiv versagenden Verklebung der beiden Fügeteiloberflächen.

Die Erfindung wird anhand von Ausführungsbeispielen in sechs Figuren beschrieben. Dabei zeigen:
- Fig. 1a, Fig. 1b: seitliche Ansicht einer erfindungsgemäßen Verklebung eines Klebebandes und einer ersten Fügeteiloberfläche im geschlossenen und im geöffneten Zustand,
- Fig. 2: drei Fotos von tesa^{®} 7812 auf ABS nach Plasmavorbehandlung einer Klebmasse und der ABS-Oberfläche,
- Fig. 3: Bruchbilder von tesa^{®} 7812 auf Autolack bei unbehandelten Oberflächen, wenn nur die erste Oberfläche der Klebmasseschicht, nur die Lackoberfläche,(WIE AUCH) sowohl die erste Oberfläche der Klebmasseschicht als auch die Lackoberfläche plasmavorbehandelt sind,
- Fig. 4a, Fig. 4b: Fotos eines geöffneten Klebebandes mit Klebmasse tesa 707x-Kern auf Cello 33.13 nach Plasmalamination,
- Fig. 5: Darstellung der prinzipiellen Funktionsweise des Plasmalaminierens.

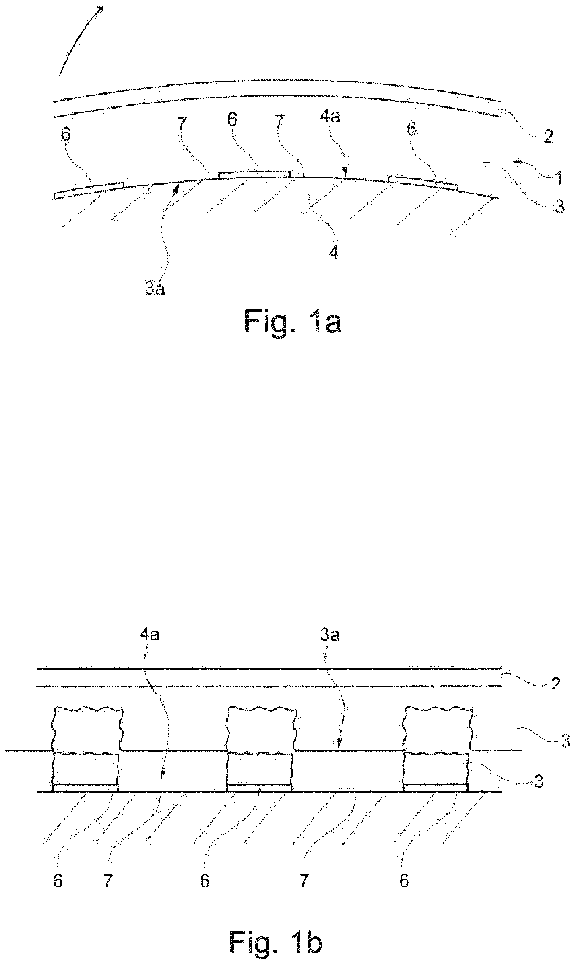

Fig. 1a zeigt einen prinzipiellen Aufbau einer erfindungsgemäßen Verklebung zwischen einem Klebeband 1, das eine Trägerfolie 2 und eine Klebmasseschicht 3 aufweist, wobei eine erste Klebmasseschichtoberfläche 3a der Klebmasseschicht 3 auf der der Trägerfolie 2 abgewandten Seite der Klebmasseschicht 3 angeordnet ist und die erste Oberfläche 3a der Klebmasseschicht 3 dazu bestimmt ist, auf einer ersten Fügeteiloberfläche 4a eines ersten Fügeteils 4 aufgeklebt zu werden. In Fig. 1a ist der aufgeklebte Zustand dargestellt.

Die freie erste Klebmasseschichtoberfläche 3a des Klebebandes 1 ist zunächst frei. Das Klebeband 1 wird dann mit seiner ersten Klebmasseschichtoberfläche 3a auf die erste Fügeteiloberfläche 4a aufgeklebt.

Die Verklebung zwischen der ersten Klebmasseschichtoberfläche 3a und der ersten Fügeteiloberfläche 4a ist vorbehandelt, indem entweder die erste Klebmasseschichtoberfläche 3a oder die erste Fügeteiloberfläche 4a oder beide vorbehandelt werden bzw. sind.

Bei der Vorbehandlung handelt es sich grundsätzlich um eine flächig partielle Vorbehandlung. Es kann es sich zweckmäßigerweise um einen flächig partiellen Auftrag eines Primers auf die erste Klebmasseschichtoberfläche 3a oder die erste Fügeteiloberfläche 4a oder auf beide, aber auch um eine flächig partielle Plasmavorbehandlung entweder der ersten Klebmasseschichtoberfläche 3a oder der ersten Fügeteiloberfläche 4a oder beider Oberflächen 3a, 4a handeln.

Flächig partiell vorbehandelt heißt hier, dass die jeweilige Oberfläche nicht vollflächig, d. h. über die gesamte Ausdehnung der Fläche vorbehandelt wird, sondern nur partiell, also in vorbehandelten Bereichen 6 der Oberfläche. Die vorbehandelten Bereiche 6 können einzeln verteilt oder zusammenhängend ausgebildet sein und/oder jede beliebige Umfangsform annehmen.

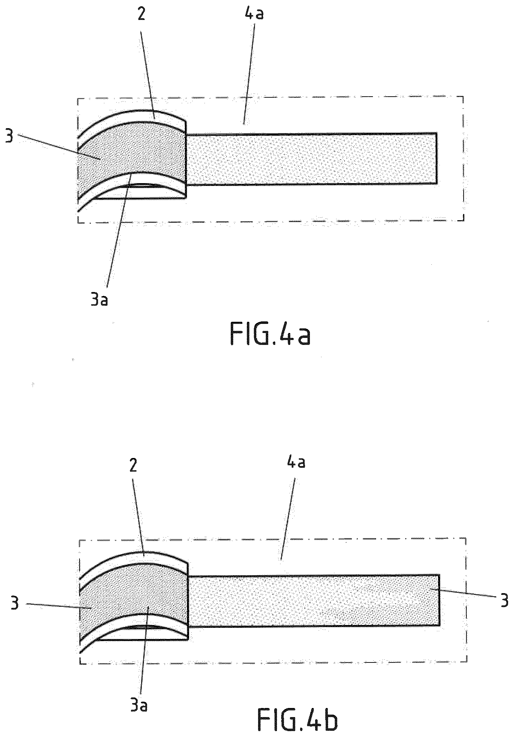

Die vorbehandelten Bereiche 6 können zusammenhängend oder voneinander getrennt über die Oberfläche verteilt sein. Die Oberflächenvorbehandlung weist vorzugsweise eine reproduzierbare Struktur auf. Eine vorgegebene, reproduzierbare Struktur kann beispielsweise durch Aufbringen eines Stempels, der die vorbehandelten Bereiche 6 freilässt, die einer Plasmavorbehandlung ausgesetzt werden, und unbehandelte Bereiche 7 abdeckt, die komplementär zu den vorbehandelten Bereichen 6 ausgebildet sind und keiner Plasmavorbehandlung unterzogen werden, erfolgen. Dazu wird beispielsweise Gas durch Röhren in Bereiche eines Stempels geleitet, das als Prozessgas die Oberfläche bereichsweise aktiviert. Der Stempel und die Oberfläche werden als Pole einem hochfrequenten elektrischen Wechselfeld ausgesetzt. Ein derartiger Stempel ist beispielsweise in "Plasma Printing and Related Techniques - Patterning of Surfaces Using Microplasmas at Atmospheric Pressure" in Plasma Process. Polym. 2012, 9, 1086-1103 Fig. 4 auf Seite 1.091 beschrieben. Es sind jedoch auch andere Verfahren zur Aufbringung einer vorgebbaren plasmavorbehandelten Struktur auf eine Oberfläche denkbar, die in dem genannten Artikel beschrieben werden.

Bei der Vorbehandlung durch einen Primerauftrag kann die Erzeugung und flächig partielle Aufbringung der Struktur auch durch Anwendung lithographischer Verfahren erfolgen.

Vorzugsweise erfolgt die Vorbehandlung der Verklebung ausschließlich an der ersten Fügeteiloberfläche 4a. Alternativ kann auch die Klebmasseschichtoberfläche des Klebebandes flächig partiell vorbehandelt werden, beispielsweise ebenfalls durch ein Plasmaverfahren oder auch durch flächig partielle Aufbringung eines Primers.

In Fig. 1b ist der Zustand der Verklebung nach dem Abziehen des Klebebandes 1 von der ersten Fügeteiloberfläche 4a dargestellt.

In den plasmavorbehandelten Bereichen 6 wird die Trennkraft durch die Plasmavorbehandlung zwischen erster Fügeteiloberfläche 4a und erster Klebmasseschichtoberfläche 3a vergrößert gegenüber der Trennkraft zwischen der unbehandelten ersten Fügeteiloberfläche 4a und der ersten Klebmasseschichtoberfläche 3a.

Die Trennkraft wird erfindungsgemäß soweit erhöht, dass sie höher ist als die Kohäsionsfestigkeit der Klebmasseschicht 3, so dass bei Abziehen des Klebebandes 1 über den vorbehandelten Bereichen 6, die mit Plasma vorbehandelt sind, ein kohäsiver Bruch innerhalb der Klebmasseschicht 1 auftritt. Über den nicht plasmavorbehandelten Bereichen 7 ist die Trennkraft zwischen Fügeteiloberfläche 4a und erster Klebmasseschichtoberfläche 3a kleiner als die Kohäsionsfestigkeit der Klebmasseschicht 1, so dass sich bei Abziehen des Klebebandes 1 von der ersten Fügeteiloberfläche 4a in den nicht plasmavorbehandelten Bereichen 7 die Klebmasseschicht 3 wieder unmittelbar von der ersten Fügeteiloberfläche 4a ablöst.

Fig. 1b zeigt das unterschiedliche Bruchverhalten des Klebebandes 1 über plasmavorbehandelten Bereichen 6 und nicht plasmavorbehandelten Bereichen 7 der ersten Fügeteiloberfläche 4a. Erfindungswesentlich ist, dass durch die unterschiedliche Höhe der Bruchlinie über der ersten Fügeteiloberfläche 4a beim Ablösen des Klebebandes 1 zusätzliche, gegenüber der ersten Fügeteiloberfläche 4a senkrechte Bruchlinien innerhalb der Klebmasseschicht 3 entstehen, so dass die Bruchfläche gegenüber einem vollflächigen kohäsiven Versagen oder einem vollflächigen adhäsiven Versagen vergrößert wird. Durch die Vergrößerung der Bruchfläche entsteht der gewünschte Effekt, dass die Trennkraft zwischen der Trägerfolie 2 und der ersten Fügeteiloberfläche 4a, also die Kraft, mit der die Trägerfolie 2 von der Fügeteiloberfläche 4a abgezogen wird, sogar größer sein kann als die Trennkraft bei vollflächigem kohäsivem Versagen der Klebmasseschicht 3.

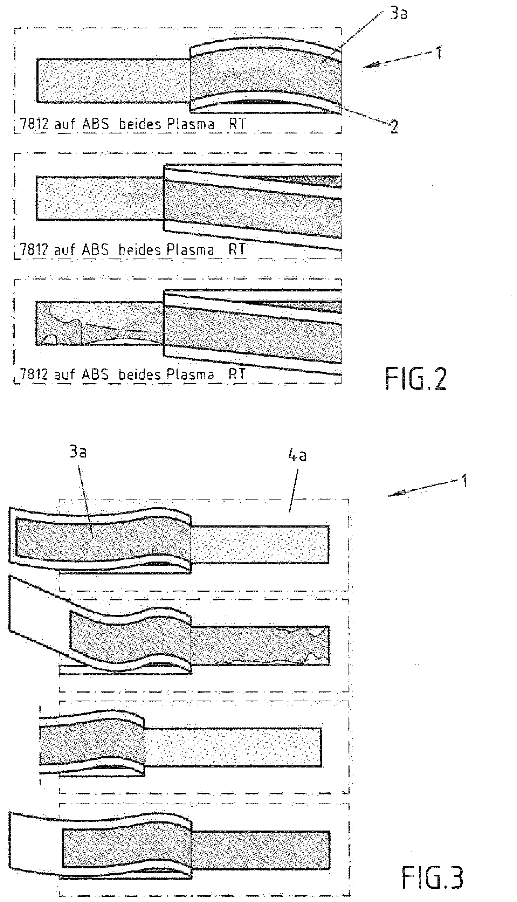

In Fig. 2 ist die Verankerung des *tesa*^{®} *ACXplus 7812* Klebebandes 1 auf der ersten Fügeteiloberfläche 4a aus *ABS* dargestellt. Das Klebeband 1 ist hier auf *ABS* aufgeklebt, wobei es sich bei ABS um Acrylnitrilbutadienstyrol handelt. Bei dem *tesa*^{®} *ACXplus 7812* Klebeband 1 handelt es sich um ein tiefschwarzes Acrylschaumklebeband, die Klebmasseschicht ist auf einer chemisch geätzten PET (Polyethylen) Stabilisierungsfolie, die hier transparent dargestellt ist, aufgebracht.

In den in der Fig. 2 gezeigten drei Fotos sind sowohl die Fügeteiloberfläche 4a, also die Oberfläche des *ABS* Untergrundes, als auch die erste Klebmasseschichtoberfläche 3a der *tesa ACX 7812* Klebmasseschicht 3 mit einem *Piezobrush*^{®} plasmavorbehandelt vorbehandelt. In Fig. 2 sind drei *tesa*^{®} *ACXplus 7812* Klebebänder 1 auf die ABS-Fügeteiloberfläche 4a aufgeklebt worden. Die Plasmavorbehandlung erfolgte mittels eines Plasmagerätes der Marke *Piezobrush*^{®}*.*

Der *Piezobrush*^{®} der Firma *Reylon Plasma* Gmbh, vormals *Reinhausen Plasma* GmbH erzeugt das Plasma über einen piezoelektrischen Effekt, welcher durch entgegengesetzte Polarisationsrichtungen des Kristalls ermöglicht wird. Resultierend aus dieser Entladungstechnik entsteht gegenüber einem Lichtbogen ein kaltes, nicht-thermisches Plasma. Die Temperaturen liegen bei nahezu Raumtemperatur.

Das Prinzip des Piezo-Elementes ist beispielsweise in der EP 2 168 409 B1 dargestellt. Piezo-Elemente eignen sich insbesondere in Verbindung mit an ihnen vorgesehenen Kühlanordnungen, so dass das durch das elektrische Wechselfeld erzeugte Plasma nachträglich gekühlt werden kann und aus einer Austrittsdüse der Plasmaquelle, die nicht explizit dargestellt ist, ein sogenanntes Niederplasmatemperatur-Plasma austreten kann.

Der *Piezobrush PZ2* stellt ein Plasma mit einer Plasmatemperatur von weniger als 50 °C her.

Der *Piezobrush PZ2* wird in einem Abstand von 5 mm -10 mm und einer Geschwindigkeit von bis zu 5 m pro Minute über eine Substratoberfläche bzw. eine Klebemitteloberfläche geführt und bereitet die Oberflächen damit für den Klebevorgang vor.

Aufgrund der geringen Plasmatemperatur von weniger als 50 °C kann dieselbe Plasmaquelle sowohl zur Vorbehandlung der Fügeteiloberfläche 4a als auch zur Vorbehandlung der Klebmasseschichtoberfläche 3a verwendet werden.

Bei dem *Piezobrush*^{®} handelt es sich um ein Handplasmagerät, welches für diesen Versuch jedoch über einem Verfahrtisch montiert wurde um gleichbleibende Bedingungen während der Behandlung zu erzielen. Die Geschwindigkeit der Verfahrtisches mit dem Fügeteil 4 und der Klebmasse 3 wurden so gewählt, dass die Geschwindigkeit mit 5m/min keine homogene Behandlung zuließ. Dieses wird in den drei Fotos der Fig. 2 dargestellt. In allen drei Fällen wurden die Abzugskräfte durch eine 90° Klebkraftprüfung durchgeführt, also die Verstärkungsfolie in einem 90°-Winkel von der ABS-Folie abgezogen.

Im ersten Fall, d. h. in der Fig. 2 oben wurde eine Trennkraft von 66,2 N/cm, bei der mittleren Proben von 88,47 N/cm und im unteren Beispiel von 92,93 N/cm gemessen. Bei einem vollflächigen kohäsiven Versagen in der Produktmitte liegt die Trennkraft bei ca. 67 N/cm. Damit zeigt sich, dass durch die flächig partielle Vorbehandlung der Oberflächen und das daraus resultierende inhomogene Bruchverhalten der Klebmasseschicht in der Fig. 2 in einigen Fällen mit einer erheblichen Erhöhung der Trennkräfte gegenüber einem vollflächigen kohäsiven Versagen gerechnet werden kann.

Fig. 3 zeigt vier weitere Versuche, bei denen jeweils das *tesa*^{®} *ACXplus 7812* Klebeband auf Autolack *2K-Klarlack enhanced 540* der Firma *Hemmelrath Lackfabrik* GmbH aufgebracht wurde und eine Vorbehandlung von Oberflächen mit Hilfe einer Plasmadüse der Firma *Plasmatreat* durchgeführt wurde.

Die Plasmadüse funktioniert nach einem etwas anderen Prinzip der elektrischen Felderzeugung und ist z.B. in EP 0986939 A1 beschrieben. Das durch den Entladungsraum strömende Gas wird durch das Plasma ionisiert. Dieses Plasma gelangt dann durch den Gasstrom getrieben an die zu behandelnde Oberfläche und führt dort insbesondere eine Oberflächenoxidation durch, welche die Benetzbarkeit der Oberfläche verbessert. Die Art der physikalischen Vorbehandlung wird (hier) als indirekt bezeichnet, weil die Vorbehandlung nicht am Erzeugungsort der elektrischen Entladung vorgenommen wird wie bei einer Korona-Entladung. Die Vorbehandlung der Oberfläche findet bei oder nahe bei Atmosphärendruck statt, wobei jedoch der Druck im elektrischen Entladungsraum oder Gaskanal erhöht sein kann. Unter dem Plasma wird hier ein Atmosphärendruckplasma verstanden, das ein elektrisch aktiviertes homogenes reaktives Gas ist, das sich nicht im thermischen Equilibrium befindet, mit einem Druck nahe dem Umgebungsdruck im Wirkbereich. Im Allgemeinen beträgt der Druck 0,5 bar mehr als der Umgebungsdruck. Durch die elektrischen Entladungen und durch lonisierungsprozesse im elektrischen Feld wird das Gas aktiviert, und es werden hochangeregte Zustände in den Gasbestandteilen erzeugt. Das verwendete Gas und die Gasmischung werden als Prozessgas bezeichnet. Bestandteile des Atmosphärendruckplasmas können hochangeregte atomare Zustände, hochangeregte molekulare Zustände, Ionen, Elektronen, unveränderte Bestandteile des Prozessgases sein. Das Atmosphärendruckplasma wird nicht in einem Vakuum erzeugt, sondern üblicherweise in Luftumgebung. Das bedeutet, dass das ausströmende Plasma, wenn das Prozessgas nicht selbst schon Luft ist, zumindest Bestandteile der umgebenden Luft enthält.

Im ersten Fall, der in Fig. 3 oben dargestellt ist, sind sowohl die erste Klebmasseschichtoberfläche 3a als auch die Lackoberfläche 4a unbehandelt. Im zweiten Fall ist die Oberfläche der Klebmasseschicht 3a mit der Plasmadüse vorbehandelt worden, im dritten Fall ist nur der Lack vorbehandelt worden, und im vierten Fall sind beide Oberflächen 3a, 4a mit der Plasmadüse vorbehandelt worden.

Die gemessenen Trennkräfte liegen jedoch deutlich tiefer, nämlich um jeweils mehr als 20 N/cm tiefer als bei dem in Fig. 2 gezeigten teilweise kohäsiven Versagen. Die Trennkräfte bei gleichmäßigem Kohäsionsbruch sind also geringer als bei teilweise kohäsivem Versagen.

In den Figuren 4a und 4b ist ebenfalls eine Mischung aus kohäsivem und adhäsivem Versagen der Verklebung zwischen Klebeband 1 und Fügeteiloberfläche 4a dargestellt. Als Klebeband 1 wurde ein Zweischichtaufbau aus einem selbstklebenden vikoelastischen Trägermaterial auf Acrylatbasis mit einer Acrylatklebemasse als Funktionsschicht verwendet. Das Klebeband 1 wurde von beiden Seiten mit einer chemisch geätzten PET Folie für den T-Peel Test verstärkt. Das beschriebene Klebeband 1 wurde durch Plasmalamination hergestellt wodurch sowohl die Oberfläche der Klebmasseschicht 3a als auch die Oberfläche des Trägermaterials 4a durch Plasma bei sehr geringen Leistungen behandelt wurden.

Der Vorgang der Plasmalamination zeichnet sich dadurch aus, dass zwei aufeinander zu laminierende Oberflächen direkt vor der Laminierung mit Plasma vorbehandelt werden, beispielsweise indem zwischen zwei gegenläufigen Walzen zwei Folien mit den beiden zueinanderweisenden Oberflächen gezogen werden und eine Plasmadüse auf die beiden auseinandergezogenen Oberflächen vor dem Laminieren und Einziehen in den Laminierspalt gerichtet ist.

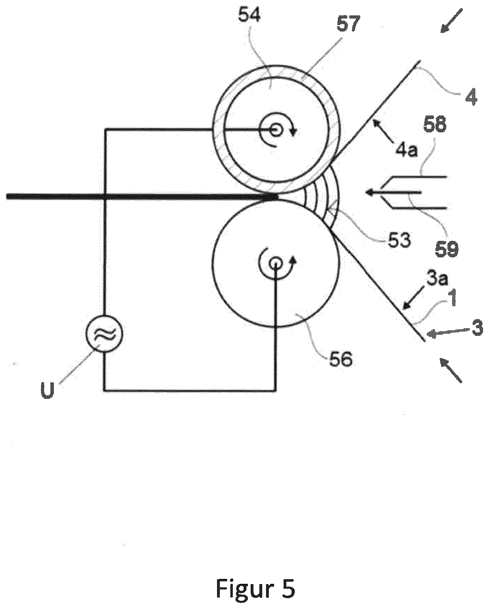

In Fig. 5 ist ein Laminierspalt 53 gezeigt, der von einer Druckwalze 54 und einer Gegendruckwalze 56 gebildet wird, die den zur Laminierung gewünschten Gegendruck aufbaut. Die im Durchmesser und in ihrer Längsausdehnung entlang ihrer Drehachsen gleichgroßen Walzen 54, 56 laufen gegenläufig mit einer identischen Umfangsgeschwindigkeit. Auf der Druckwalze 54 ist eine Schicht eines Dielektrikums 57 außen aufgebracht, die die Druckwalze 54 vollständig umläuft und die entlang der gesamten Längsausdehnung der Druckwalze 54 vollflächig auf die Außenfläche der Druckwalze 54 aufgebracht ist. Die Schichtdicke des Dielektrikums 57 beträgt vorzugsweise zwischen 1 bis 5 mm. Das Dielektrikum 57 besteht zweckmäßigerweise aus Keramik, Glas, Kunststoffen, Gummi, wie Styrol-Butadien-Kautschuken, Chloropren-Kautschuken, Butaden-Kautschuken, Acrylnitril-Butadien-Kautschuken, Butyl-Kautschuken, Ethylen-Propylen-Dien-Kautschuken(EPDM) oder Polyisopren-Kautschuken (IR).

Zwischen der Druckwalze 54 und der Gegendruckwalze 56 ist eine hochfrequente Wechselspannung angelegt, die in dem Laminierspalt 53 ein Plasma erzeugt. Ein Prozessgas 59 wird über eine Prozessgasdüse 58 dem Laminierspalt 53 zugeführt, als Prozessgas 59 wurde in verschiedenen Versuchen Luft oder Stickstoff oder Kohlenstoffdioxyd verwendet, es sind jedoch auch andere Prozessgase oder Mischungen dieser Prozessgase denkbar.

Die Plasmavorbehandlung findet bei einem Druck nahe am Atmosphärendruck, d.h. bei Atmosphärendruck ±0,05 bar oder bei Atmosphärendruck statt.

Dem Laminierspalt 53 werden das Trägermaterial 4 und die Klebmasseschicht 3 kontinuierlich und mit gleicher Bahnrichtung zugeführt. Die Bahngeschwindigkeiten liegen bei 0,5 bis 200 m/min, vorzugsweise zwischen 1 bis 50 m/min, besonders bevorzugt zwischen 2 bis 20 m/min.

In dem Laminierspalt 53 werden die erste Klebmasseschichtoberfläche 3a und die erste Oberfläche des Trägermaterials 4a zusammenlaminiert, d. h. zusammengedrückt, so dass ein Laminat entsteht, das das Klebeband 1 ausbildet. Die beiden ersten Oberflächen 3a, 4a sind so zueinander angeordnet, dass sie beim Laminieren unter direktem Kontakt zueinander und unter Druck gegeneinander aufeinandergedrückt werden. Die beiden ersten Oberflächen 3a, 4a werden vor dem Zusammenlaminieren jeweils vollflächig plasmavorbehandelt, und zwar in der Weise, dass das Plasma beginnend vor dem Laminierspalt 53 bis in den Laminierspalt 53 hinein kontinuierlich auf die beiden ersten Oberflächen einwirkt.

Die normale Kohäsionsfestigkeit der des viskoelastischen Trägermaterials 3 liegt bei 18,3 N/cm, während die Trennkraft bei teilweise kohäsivem Versagen gemäß Fig. 4b bei 18,9 N/cm liegt. Die Trennkraft in Fig. 4a in einem anderen Fall des teilweise kohäsiven Versagens liegt bei 9,5 N/cm. Die Versuche haben insgesamt klar gezeigt, dass durch eine Oberflächenvorbehandlung ein bereichsweise kohäsives und ein bereichsweise adhäsives Versagen bzw. Trennen einer Verklebung bewirkt werden kann und dass die Trennkräfte der Verklebung oberhalb der Trennkräfte einer vollflächig kohäsiv versagenden Klebverbindung liegen können.

### Bezugszeichenliste

- 1: Klebeband
- 2: Trägerfolie
- 3: Klebmasseschicht
- 3a: Oberfläche der Klebmasseschicht
- 4: Fügeteil / Trägermaterial
- 4a: Fügeteiloberfläche

- 6: vorbehandelte Bereiche
- 7: unbehandelte Bereiche

- 53: Laminierspalt
- 54: Druckwalze
- 56: Gegendruckwalze
- 57: Dielektrikum
- 58: Prozessgasdüse
- 59: Prozessgas

## Patentansprüche

1. Verfahren zur Verklebung einer Klebmasseschicht (3) mit einem ersten Fügeteil (4), indem
eine erste Oberfläche (3a) der Klebmasseschicht (3) auf eine erste Fügeteiloberfläche (4a) aufgebracht wird und die erste Oberfläche (3a) der Klebmasseschicht (3) und/oder die erste Fügeteiloberfläche (4a) flächig partiell vorbehandelt wird und eine Trennkraft in vorbehandelten Bereichen (6) zwischen der ersten Fügeteiloberfläche (4a) und der ersten Oberfläche (3a) der Klebmasseschicht (3) dadurch erhöht wird und sich bei Abziehen der Klebmasseschicht (3) von der ersten Fügeteiloberfläche (4a) die Klebmasseschicht (3) in vorbehandelten Bereichen (6) kohäsiv trennt und sich in unbehandelten Bereichen (7) die erste Oberfläche (3a) der Klebmasseschicht (3) adhäsiv von der ersten Fügeteiloberfläche (4a) trennt.

2. Verfahren nach Anspruch 1,
**dadurch gekennzeichnet, dass** eine zweite Oberfläche der Klebmasseschicht (3) auf eine zweite Fügeteiloberfläche aufgebracht wird.

3. Verfahren nach Anbruch 1 oder 2,
**dadurch gekennzeichnet, dass** die erste Oberfläche (3a) der Klebmasseschicht (3) und/oder die erste Fügeteiloberfläche (4a) mit einem Primer vorbehandelt wird.

4. Verfahren nach Anspruch 1, 2 oder 3,
**dadurch gekennzeichnet, dass** die erste Oberfläche (3a) der Klebmasseschicht (3) und/oder die erste Fügeteiloberfläche (4a) mit einem Plasma vorbehandelt wird.

5. Verfahren nach Anspruch 4,
**dadurch gekennzeichnet, dass** die Plasmavorbehandlung durch ein Plasmadruckverfahren erfolgt.

6. Verfahren nach einem der vorstehenden Ansprüche,
**dadurch gekennzeichnet, dass** erste die Oberfläche (3a) der Klebmasseschicht (3) und/oder die erste Fügeteiloberfläche (4a) in einem vorbestimmten Muster mit Plasma vorbehandelt wird.

7. Verfahren nach Anspruch 6,
**dadurch gekennzeichnet, dass** die kleinsten Abstände zwischen den mit Plasma vorbehandelten Bereichen (6) des Musters zwischen 1 bis 10 µm liegen.

8. Verfahren nach einem der vorstehenden Ansprüche,
**dadurch gekennzeichnet, dass** die erste Oberfläche (3a) der Klebmasseschicht (3) und/oder die erste Fügeteiloberfläche (4a) zunächst mit Plasma vorbehandelt wird und dann auf die mit Plasma vorbehandelten Bereiche (6) der Primer aufgebracht wird.

9. Verfahren nach einem der vorstehenden Ansprüche,
**dadurch gekennzeichnet, dass** eine Trennkraft zwischen der ersten Oberfläche (3a) der Klebmasseschicht (3) und der ersten Fügeteiloberfläche (4a) gegenüber einer Trennkraft bei einem vollflächig kohäsiven Versagen der Klebmasseschicht (3) erhöht ist.

10. Bauteil mit einer ersten Fügeteiloberfläche (4a) und einer zweiten
Fügeteiloberfläche, die beide miteinander gemäß dem Verfahren nach Anspruch 1 mit einer Klebmasseschicht (3) verklebt sind,
**dadurch gekennzeichnet, dass** eine Trennkraft zwischen den beiden Fügeteiloberflächen (4a) höher ist als eine Trennkraft eines vollflächig kohäsiven Versagens der Klebmasseschicht (3).

## Claims

1. Method for bonding an adhesive layer (3) with a first joining part (4), in which
a first surface (3a) of the adhesive layer (3) is applied to a first joining part surface (4a) and the first surface (3a) of the adhesive layer (3) and/or the first joining part surface (4a) is/are subjected to partial area pre-treatment, a separating force in pre-treated areas (6) between the first joining part surface (4a) and the first surface (3a) of the adhesive layer (3) is increased thereby, and on peeling of the adhesive layer (3) from the first joining part surface (4a), the adhesive layer (3) separates cohesively in pre-treated areas (6) and the first surface (3a) of the adhesive layer (3) separates adhesively from the first joining part surface (4a) in untreated areas (7).

2. Method according to Claim 1,
**characterized in that** a second surface of the adhesive layer (3) is applied to a second joining part surface.

3. Method according to Claim 1 or 2,
**characterized in that** the first surface (3a) of the adhesive layer (3) and/or the first joining part surface (4a) is/are pre-treated with a primer.

4. Method according to Claim 1, 2 or 3,
**characterized in that** the first surface (3a) of the adhesive layer (3) and/or the first joining part surface (4a) is/are treated with a plasma.

5. Method according to Claim 4,
**characterized in that** the plasma pre-treatment is carried out by a plasma printing process.

6. Method according to one of the preceding claims, **characterized in that** the first surface (3a) of the adhesive layer (3) and/or the first joining part surface (4a) is/are pre-treated with plasma in a predetermined pattern.

7. Method according to Claim 6,
**characterized in that** the smallest distances between the areas (6) of the pattern pre-treated with plasma are between 1 and 10 µm.

8. Method according to one of the preceding claims, **characterized in that** the first surface (3a) of the adhesive layer (3) and/or the first joining part surface (4a) is/are first treated with plasma and the primer is then applied to the areas (6) pre-treated with plasma.

9. Method according to one of the preceding claims, **characterized in that** a separating force between the first surface (3a) of the adhesive layer (3) and the first joining part surface (4a) is increased compared to a separating force on full-surface cohesive failure of the adhesive layer (3).

10. Component with a first joining part surface (4a) and a second joining part surface, both of which are bonded to each other according to the method of Claim 1 with an adhesive layer (3),
**characterized in that** a separating force between the two joining part surfaces (4a) is higher than a separating force of a full-surface cohesive failure of the adhesive layer (3).

## Revendications

1. Procédé de collage d'une couche de masse adhésive (3) à une première partie de joint (4), par le fait que une première surface (3a) de la couche de masse adhésive (3) est appliquée sur une première surface de partie de joint (4a) et la première surface (3a) de la couche de masse adhésive (3) et/ou la première surface de partie de joint (4a) est prétraitée partiellement de manière surfacique et une force de séparation dans des zones prétraitées (6) entre la première surface de partie de joint (4a) et la première surface (3a) de la couche de masse adhésive (3) est ainsi augmentée et, lors du retrait de la couche de masse adhésive (3) de la première surface de partie de joint (4a), la couche de masse adhésive (3) se sépare de manière cohésive dans des zones prétraitées (6) et, dans des zones non traitées (7), la première surface (3a) de la couche de masse adhésive (3) se sépare de manière adhésive de la première surface de partie de joint (4a).

2. Procédé selon la revendication 1, **caractérisé en ce qu'**une deuxième surface de la couche de masse adhésive (3) est appliquée sur une deuxième surface de partie de joint.

3. Procédé selon la revendication 1 ou 2, **caractérisé en ce que** la première surface (3a) de la couche de masse adhésive (3) et/ou la première surface de partie de joint (4a) est prétraitée avec un apprêt.

4. Procédé selon la revendication 1, 2 ou 3, **caractérisé en ce que** la première surface (3a) de la couche de masse adhésive (3) et/ou la première surface de partie de joint (4a) est prétraitée avec un plasma.

5. Procédé selon la revendication 4, **caractérisé en ce que** le prétraitement par plasma est effectué par un procédé d'impression par plasma.

6. Procédé selon l'une quelconque des revendications précédentes, **caractérisé en ce que** la première surface (3a) de la couche de masse adhésive (3) et/ou la première surface de partie de joint (4a) est prétraitée au plasma selon un motif prédéterminé.

7. Procédé selon la revendication 6, **caractérisé en ce que** les plus petites distances entre les zones prétraitées au plasma (6) du motif se situent entre 1 et 10 um.

8. Procédé selon l'une quelconque des revendications précédentes, **caractérisé en ce que** la première surface (3a) de la couche de masse adhésive (3) et/ou la première surface de partie de joint (4a) est d'abord prétraitée au plasma et ensuite l'apprêt est appliqué sur les zones prétraitées au plasma (6).

9. Procédé selon l'une quelconque des revendications précédentes, **caractérisé en ce qu'**une force de séparation entre la première surface (3a) de la couche de masse adhésive (3) et la première surface de partie de joint (4a) est augmentée par rapport à une force de séparation lors d'une défaillance cohésive sur toute la surface de la couche de masse adhésive (3).

10. Composant avec une première surface de partie de joint (4a) et une deuxième surface de partie de joint, qui sont toutes deux collées l'une à l'autre avec une couche de masse adhésive (3) par le procédé selon la revendication 1,
**caractérisé en ce qu'**une force de séparation entre les deux surfaces de partie de joint (4a) est supérieure à une force de séparation d'une défaillance cohésive sur toute la surface de la couche de masse adhésive (3).
